(19) Europäisches Patentamt
European Patent Office
Office européen des brevets

(11) Veröffentlichungsnummer: **0 271 478 B1**

(12) **EUROPÄISCHE PATENTSCHRIFT**

(45) Veröffentlichungstag der Patentschrift:
13.02.91 Patentblatt 91/07

(51) Int. Cl.$^5$: **F02B 23/06**

(21) Anmeldenummer: 87890268.3

(22) Anmeldetag: 24.11.87

(54) Luftverdichtende, ventilgesteuerte Brennkraftmaschine.

(30) Priorität: 12.12.86 AT 3313/86

(43) Veröffentlichungstag der Anmeldung:
15.06.88 Patentblatt 88/24

(45) Bekanntmachung des Hinweises auf die
Patenterteilung:
13.02.91 Patentblatt 91/07

(84) Benannte Vertragsstaaten:
DE ES FR GB IT NL SE

(56) Entgegenhaltungen:
DE-A- 2 739 419
DE-A- 3 510 076
DE-C- 481 150
GB-A- 715 524
US-A- 2 505 999

(73) Patentinhaber: AVL Gesellschaft für
Verbrennungskraftmaschinen und
Messtechnik mbH.Prof.Dr.Dr.h.c. Hans List
Kleiststrasse 48
A-8020 Graz (AT)

(72) Erfinder: Schweinzer, Franz, Dipl.-Ing.
Pensionsweg 14
A-8043 Graz (AT)
Erfinder: Cartellieri, Wolfgang, Dipl.-Ing.
Ziernfeldgasse 11
A-8010 Graz (AT)

(74) Vertreter: Krause, Walter, Dr. Dipl.-Ing. et al
Postfach 200 Singerstrasse 8
A-1010 Wien (AT)

## Beschreibung

Die Erfindung bezieht sich auf eine luftverdichtende, ventilgesteuerte Brennkraftmaschine mit direkter Kraftstoffeinspritzung und einem Einlaßkanal zur Erzeugung einer Rotation der einströmenden Luft um die Zylinderachse, sowie einem im Kolben liegenden am Ende des Verdichtungshubes nahezu die gesamte Verbrennungsluft aufnehmenden torusförmigen Brennraum, dessen Auslauf zur Kolbenoberseite eingeschnürt und die Umfangsbegrenzung der Einschnürung des Brennraumes zur Kolbenoberseite hin zylindrisch ist, einem rotationsförmigen Mittenteil, der an der Bildung des torusförmigen Brennraumes beteiligt ist, sowie einer mit ihren Ausmündungen annähernd auf der Brennraumachse angeordneten Einspritzdüse, welche den Kraftstoff in den torusförmigen Brennraum einbringt.

Eine Einspritzbrennkraftmaschine dieser Art ist in der im Jahre 1935 veröffentlichten CH-PS 175 433 beschrieben. Die Konstruktion dieser Brennkraftmaschine ging von dem Gedanken aus, daß es erforderlich ist, die Ladeluft zu allen Brennstoffteilchen gelangen zu lassen und daß sich keine Tropfen des Brennstoffes an den Wandungen des Verbrennungsraumes ansetzen sollen, da sonst eine Verzögerung der Verbrennung und eine unvollständige Verbrennung stattfindet, die sich durch Rußbildung im Auspuff anzeigt. Dementsprechend wurde dem torusförmigen Verbrennungsraum eine mehrstrahlige Einspritzdüse so zugeordnet, daß die Brennstoffstrahlen den Ringwirbel der Luft einmal beim Durchtritt der Luft durch die Drosselöffnung im inneren Teil der Torusform und ein zweites Mal im äußeren Teil derselben durchsetzen. Dadurch sollte eine vollkommene Verteilung des Brennstoffes in der Ladeluft erzielt werden, die sich in einer rußfreien Verbrennung des Brennstoffes und einer beträchtlichen Leistungssteigerung der Maschine zeigen sollte. Es waren Mittel vorgesehen, um die Ladeluft beim Eintritt in den Arbeitszylinder in kreisende Bewegung zu versetzen. Die den Verbrennungsraum mit dem Hubraum des Zylinders verbindende Drosselöffnung, deren Querschnitt etwa 1/3 bis 1/6 des Zylinderquerschnittes beträgt, bewirkt eine Beschleunigung der kreisenden Bewegung der Luft beim Durchtritt durch die Drosselöffnung, wobei ihr eine Ringwirbelbewegung überlagert wird.

Die zu Zeiten der Veröffentlichung der CH-PS 175 433 realisierbaren Einspritzdrücke sind deutlich niedriger als heutzutage erreichbare. Anderseits reicht die hiebei erreichbare Gemischbildungsenergie der verdichteten Luft nicht aus, um mit einem niedrigen Einspritzdruckniveau die für neuzeitliche Motoren geforderte hohe Leistung zu erzielen. Mit diesem Verfahren können also die notwendigen Einspritzmengen nicht mehr, wie angestrebt wurde, ohne Wandablagerung von Kraftstoff, d.h. vorwiegend luftverteilt, zu einem homogenen Gemisch aufbereitet werden.

Die niedrigen Einspritzdrücke bei der bekannten Brennkraftmaschine bringen den Nachteil niedriger Vollastleistung durch unvollständige Aufbereitung von höheren Einspritzmengen. Außerdem ist nur eine niedrige Verdichtung realisierbar, weil bei höherer Verdichtung die Gemischbildungsenergie stark abfällt und damit die rauchbegrenzte Vollastleistung abnimmt. Diese niedrige Verdichtung bedeutet ein hohes Verbrennungsgeräusch, ein schlechtes Startverhalten und hohe Kohlenwasserstoffemission. Eine hohe Gemischbildungsenergie bleibt nicht lange genug erhalten, sodaß der Zündzeitpunkt für eine rauchfreie Verbrennung früh zu legen ist. Daraus ergeben sich wiederum eine hohes Verbrennungsgeräusch, hohe Stickoxidemissionen und hohe Zylinderspitzendrücke.

Die Realisierung der aufgrund der Emissionsforderungen, aber auch aus Geräusch- und Wirtschaftlichkeitsgründen notwendigen hohen Verdichtung $\varepsilon$ = 19 bis 22 : 1 würde, wie bereits erwähnt, bei einer Brennkraftmaschine gemäß CH-PS 175 433 eine deutliche Verringerung der Gemischbildungsenergie der verdichteten Luft und damit eine Verringerung der rauchbegrenzten Vollastleistung bewirken.

Mit einer Erhöhung des Einspritzdruckes auf heutzutage bei Nennleistung üblich Spitzendrücke zwischen 600 bis etwas über 1000 bar, könnte man bei der bekannten Brennkraftmaschine die Gemischbildungsverhältnisse verbessern, wobei jedoch ein - je nach Druckniveau - immer höherer Wandanteil (bis zu 80 %) des Kraftstoffes eintritt.

Dieser hohe Wandanteil bewirkt beim Brennraum der bekannten Brennkraftmaschine vor allem eine Verschlechterung der Gemischaufbereitung. Unvollständige Gemischaufbereitung verursacht eine hohes Verbrennungsgeräusch des Motors durch große Zündverzüge, eine hohe Rußemission bzw. reduzierte Leistung bei vorgegebenen Rauchwerten, höhere Kohlenwasserstoff-Emissionen und Wirkungsgradverluste.

Besonders ist auch darauf hinzuweisen, daß wandangelagerte Kraftstoffilme, welche von den einzelnen Einspritzstrahlen herrühren, in die turbulenzarmen Zonen im Zentrum der Mulde gelangen und dort unvollständig aufbereitet werden, mit den oben erwähnten ungünstigen Auswirkungen auf das Motorbetriebsverhalten.

Brennkraftmaschinen mit Wirbel- oder Vorkammer weisen andersartige Vor- und Nachteile auf. Vorteilhaft sind niedrige Rauchwerte bei Vollast durch Mischungsenergie im Hauptbrennraum bei Austritt aus dem Schußkanal. Ferner ein geringes Geräusch bei hohem Verdichtungsverhältnis, ein langsames bzw. spätes Brennen und damit im Zusammenhang niedrige NOx- und HC-Werte. Dagegen ergeben sich als Nachteile ein hoher Kraftstoffverbrauch, verursacht durch hohe Wärme- und Drosselverluste im Überströmkanal. Weiters ergibt sich eine hohe thermische Belastung von Schußkanal, von Kanten, der Ventilstege und des Kolbenbodens.

Der Erfindung liegt die Aufgabe zugrunde, ein optimales Verbrennungssystem zwischen einem Dieselmotor mit Direkteinspritzung und offener Brennraummulde und einem Dieselmotor mit Vor- oder Wirbelkammer zu finden, wobei die Vorteile beider Grundtypen möglichst vereinigt und die wesentlichsten Nachteile vermieden werden sollen.

Erfindungsgemäß geschieht dies dadurch, daß die Einschnürung vom zentralen Bereich des Brennraumes her durch den rotationsförmigen Mittenteil begrenzt ist, der mit seiner oberen Begrenzung im O.T. des Kolbens knapp unterhalb des Kraftstoffstrahl-Bereiches bleibt und die innere Begrenzung des engen, ringförmigen Überströmquerschnittes vom Kolben-Brennraum zur zylindrischen Einschnürung bzw. zum Zylinderraum hin bildet, und daß die Kraftstoffstrahlen der Einspritzdüse auf den Übergangsbereich des Kolbenbrennraumes zur zylindrischen Einschnürung hin gerichtet sind. Damit wird eine hohe Gemischbildungsenergie durch die Ausbildung eines engen, ringförmigen Überströmquerschnittes bereitgestellt, ohne durch zu hohe Drosselverluste und Wärmeverluste im Überströmquerschnitt den Wirkungsgrad der Brennkraftmaschine gegenüber der eingangs genannten Ausführung mit torusförmiger Brennraummulde zu verschlechtern. Auftretende Drosselverluste werden also durch die erhöhte Gemischbildungsenergie und daraus resultierendes schnelleres Brennen kompensiert. Außerdem wird bei hohen Einspritzdrücken der wandverteilte Kraftstoffanteil besser aufbereitet als bei der bekannten Brennkraftmaschine. Durch die große Oberfläche für die Strahl-Wandauftragung ergibt sich eine bessere Wandablösung des Kraftstoffilms und der Mittenteil im Muldenzentrum verhindert, daß wandaufgetragener Kraftstoffilm in die turbolenzarmen Zonen des Muldenzentrums gelangt. Gleichzeitig verringert dieser Mittenteil die erwähnten turbulenzarmen Zonen. Der Mittenteil im Muldenzentrum und die große benützbare Muldenoberfläche verhindern ein Ineinanderlaufen von Krafstoffilmen, die von verschiedenen Einspritzstrahlen herstammen. Durch teilweise Wandablösung des wandangelagerten Kraftstoffilms vom äußeren Rand des Mittenteiles der Brennraummulde im Bereich des ringförmigen Überströmquerschnittes sollen die Zonen erhöhter Luftbewegung im Torusbereich der Mulde beser für die Gemischbildung ausgenützt werden. Durch die besondere Ausbildung des Mulden-Mittenteiles ergeben sich auf dessen oberer Begrenzungsfläche Temperaturen, durch welche die knapp darüberstreichenden Kraftstoffstrahlen zusätzlich erwärmt werden und damit die Gemischaufbereitung günstig beeinflußt wird. Die durch den engen Überströmquerschnitt im Zusammenwirken mit dem Drall der Luft erzeugte hohe Geschwindungskeitsenergie bleibt in der ausgebildeten Ringkammer über einen längeren Zeitraum als bei der eingangs beschriebenen bekannten Brennraumform auf einem hohen Niveau.

Diese beschriebenen Eigenschaften des erfindungsgemäßen Ringkammer-Brennraumes haben, zusammengefaßt, folgende Auswirkungen auf das Motorbetriebsverhalten:

Eine Rauchverbesserung bzw. Erhöhung der rauchbegrenzten Vollast. Es ist möglich, hohe Verdichtungen ($\varepsilon$ = 19 bis 24 : 1) bei einem hohen Drehmoment über der Drehzahl zu verwirklichen. Diese hohe Verdichtung hat als Vorteile ein niedriges Verbrennungsgeräusch durch kleineren Zündverzug, geringere Kohlenwasserstoff-Emissionen, günstigeres Startverhalten des Motors und eine Verbesserung des Wirkungsgrades der Brennkraftmaschine. Weiters ergibt sich die Möglichkeit den Zündzeitpunkt in Richtung "spät" zu verlegen ohne wesentlichen Rauch- Verbrauchs- und HC-Anstieg durch die Tatsache, daß die Gemischbildungsenergie über einen längeren Zeitraum hoch bleibt. Diese Möglichkeit bedeutet vor allem eine Absenkung von Stickoxiden, Verbrennungsgeräusch und Zylinderspitzendruck.

In weiterer Ausgestaltung der Erfindung kann das Verhältnis der Breite des ringförmigen Überströmkanals zum Durchmesser der erzeugenden Kreisfläche des Torus 0,2 bis 0,9 vorzugsweise 0,5 bis 0,7 betragen. Liegt das Verhältnis zwischen Überströmkanalbreite und Durchmesser der erzeugenden Kreisfläche des Torus unter 0,5, so tritt ein "Kammereffekt" auf, der sich mit abnehmendem Überströmquerschnitt immer deutlicher ausprägt. Liegt das beschriebene Einschnürungsverhältnis über 0,2, so tritt dieser "Kammereffekt" ohne Verbrauchsverluste auf, d.h. einem langsamen Brennen zu Beginn folgt ein rasches Brennen gegen Ende der Verbrennung, welches durch die hohe Mischungsenergie im Hauptbrennraum bein Austreten des Gemisches und von Teilverbranntem aus der Ringkammer bewirkt wird. Dieser Effekt bewirkt eine zusätzliche Rauchverbesserung, eine weitere Reduktion der Stickoxide und eine weitere Geräuschabsenkung.

Als besonders vorteilhaft hat es sich erwiesen, wenn, nach einem weiteren Merkmal der Erfindung, die Radien des Mittelpunktkreises und der erzeugenden Kreisfläche des Torus bei einem vorgegebenen Brennraumvolumen so gewählt sind, daß die vom wandangelagerten Kraftstoffilm benetzbare Oberfläche möglichst groß ist.

Als besonders vorteilhaft hat sich die Verwendung einer Vier-oder Fünflochdüse erwiesen, bei einer mittleren Drallzahl von

$$(n_D/n)_m = 2,2,$$

worin $n_D$ die im Stationärversuch ermittelte Flügeldrehzahl des Drallmeßgerätes und n die aus der gemessenen Durchflußmenge berechnete Motordrehzahl ist, und der Index m ausdrückt, daß das Verhältnis $n_D/n$ über dem Ansaugtakt einen von O.T. bis U.T. des Motors integrierten Mittelwert darstellt.

Hiezu wird auf die Abhandlung "Entwicklungsarbeiten an Ventilkanälen von Viertakt-Dieselmotoren", G.THIEN, Graz, insbesondere Abschnitt C. "Messung der Strömungseingenschaften von Ventilkanälen", veröffentlicht in Österreichische Ingenieur-Zeitschrift, Sonderabdruck aus Heft 9, Jg. 8 (1965), Seiten 291 bis 302, verwiesen.

Dabei sollte die mittlere freie Strahllänge 20 ± 5% des Zylinderdurchmessers betragen.

Im Sinne einer gleichmäßigen Gemischbildung ist es vorteilhaft, wenn die Auftreffbereiche der Kraftstoffstrahlen im Übergang zwischen der zylindrischen Einschnürung und dem torusförmigen Brennraum liegen und die Auftreffpunkte am Muldenrand gleichmäßig verteilt sind.

Der torusförmige Brennraum kann aus zwei Teilen mit unterschiedlichen Radien des Mittelpunktskreises und der erzeugenden Kreisfläche des Torus, allenfalls mit einem zylindrischen Zwischenteil, zusammengesetzt sein. Bevorzugt sind die obere Begrenzung des zentrischen rotationsförmigen Körpers im Brennraum kegel- und/oder kugelkalottenförmig und alle entstehenden Kanten im Bereich der Brennraummulde und des Überströmkanals und im Einschnürungsbereich werden vorteilhaft zur Vermeidung zu großer thermischer Belastungen abgerundet.

In weiterer Ausgestaltung der Erfindung kann der Mittenteil und/oder der Muldenrand und/oder der Muldenbereich + Ringträger im Vergleich zum übrigen Kolben aus einem Material höherer Temperaturfestigkeit bestehen und diese Teile mit dem Schaftteil entweder zusammengegossen oder lösbar verbunden sein.

Die Erfindung wird nachfolgend anhand der Zeichnungen näher erläutert. Es zeigen : Fig. 1 einen Axialschnitt durch den Kolben und zum Teil der Zylinderkopf einer erfindungsgemäßen Brennkraftmaschine, Fig. 2 dazu eine Draufsicht auf den Kolben, die Fig. 3 bis 6 je einen teilweisen Axialschnitt durch eine weiteres Ausführungsbeispiel gemäß der Erfindung und Fig. 7 ebenfalls einen Axialschnitt des Kolbens einer anderen Ausführungsform gemäß der Erfindung. Gleiche Teile sind jeweils mit den selben Bezugszeichen versehen.

Der im Zylinder 1 mit dem Durchmesse D axial bewegliche Kolben 2 weist eine Brennraummulde 3 auf, welche einen torusförmigen Grundkörper 4, dessen Mittelpunktskreisradius R ist und dessen erzeugender Kreis einen Radius r besitzt. Die Brennraummulde 3 weist ferner eine zur Zylinderachse 1' parallele Achse 4' und einen zur Kolbenoberseite 5 hin offenen Auslauf auf, der gegenüber dem torusförmigen Grundkörper 4 der Brennraummulde 3 eine Einschnürung 6 darstellt, deren Umfangsfläche 6' zylindrisch ist. Die Brennraummulde 3 weist einen rotationskörperförmigen Mittenteil 7 auf, der in seinem unteren Teil 7' an der Bildung des torusförmigen Grundkörpers 4 der Brennraummulde beteiligt ist und mit seinem oberen Teil 7" im O.T. des Kolbens 2 bis knapp unterhalb der von der Einspritzdüse 8 ausgehenden Kraftstoffstrahlen 9 bleibt, sodaß die obere Begrenzungsfläche des Mittenteils 7, die beim vorliegenden Ausführungsbeispiel kegelstumpfförmig ist, von den Kraftstoffstrahlen 9 nicht oder wenigstens nur wenig benetzt wird. Die Kraftstoffstrahlen 9 sind gegen den Übergangsbereich 10 des torusförmigen Grundkörpers 4 zur zylindrischen Umfangsfläche 6' der Einschnürung gerichtet. Der ringförmige Überströmquerschnitt 13 weist die Breite b auf.

Die Brennraummulde 3 soll möglichst zentral im Kolben 2 angeordnet sein ; im vorliegenden Falle ist die Achse 4' des torusförmigen Grundkörpers 4 samt Mittenteil 7 aus konstruktiven Gründen - Unterbringung der Ventile und der Einspritzdüse - gegenüber der Achse 1' des Kolbens etwas versetzt.

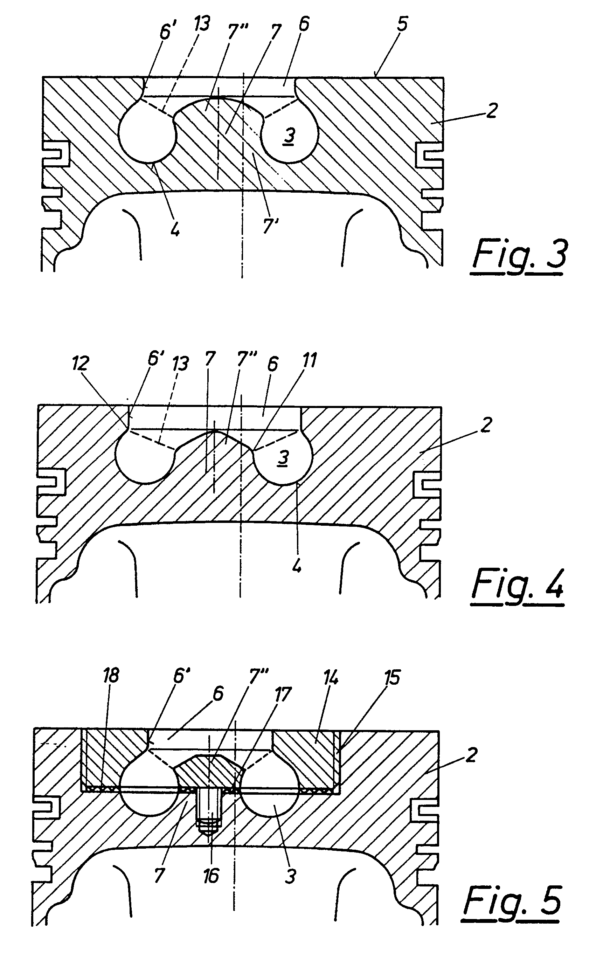

Bei der Ausführung nach Fig. 3 ist der torusförmige Grundkörper 4 der Brennraummulde 3 an der Kolbenoberseite 5 ebenfalls über die Einschnürung 6, deren Umfangsfläche 6' zylindrisch ist, mit dem Zylinderraum in Verbindung. Der untere Teil 7' des rotationskörperförmigen Mittenteils 7 ist ebenfalls an der Bildung des torusförmigen Grundkörpers 4 beteiligt. Der obere Teil 7" des Mittenteils 7 ist jedoch nach Art einer Kugelkalotte abgeplattet. Sowohl dieser kugelkalottenförmige obere Teil 7" als auch die Einschnürung 6 sind an den Übergängen zum torusförmigen Grundkörper 4 stark abgerundet.

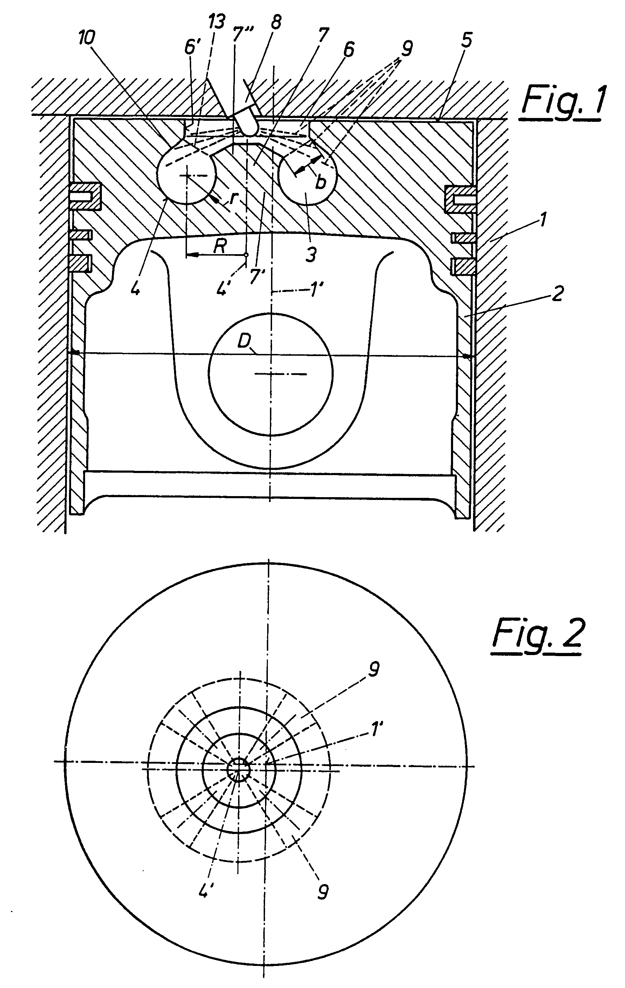

Die Ausführung nach Fig. 4 unterscheidet sich von jener nach Fig. 1 lediglich dadurch, daß der obere Teil 7" des Mittenteiles 7 nicht kegelstumpfförmig sondern kegelförmig ist. Die Verscheidungskanten 11 zwischen dem torusförmigen Grundkörper 4 und dem oberen Teil 7" des Mittenteiles 7 und die Verschneidungskanten 12 zwischen der zylindrischen Umfangsfläche 6' des Auslaufes 6 und dem torusförmigen Grundkörper 4 sind kantig oder nur wenig gerundet. Der ringförmige Überströmquerschnitt 13 von der Brennraummulde 3 zum Auslauf 6 ist deutlich größer als bei der Ausführung nach Fig. 1.

Die Ausführung nach Fig. 5 entspricht jener nach Fig. 1 mit Ausnahme der Ausführung mit einschraubbarem Muldenrand 14 und/oder oberem Teil 7" des Mittenteils 7, welche aus gleichem Material bestehen wie der gesamte Kolben 2, oder aus einem höher temperaturbeständigem Material, z.B. 25Cr20Ni-Stahl. Das Außengewinde des einschraubbaren Muldenrandes 14 ist mit 15 und der Schraubbolzen des einschraubbaren oberen Teiles 7" des Mittenteils 7 ist mit 16 bezeichnet. Beide Einschraubteile 14 und 7″ sind durch innen- bzw. außenverzahnte Zahnscheiben 17 bzw. 18 nach DIN 6797 zum Gewinde 16 bzw. 15 hin abgedichtet und verdrehgesichert.

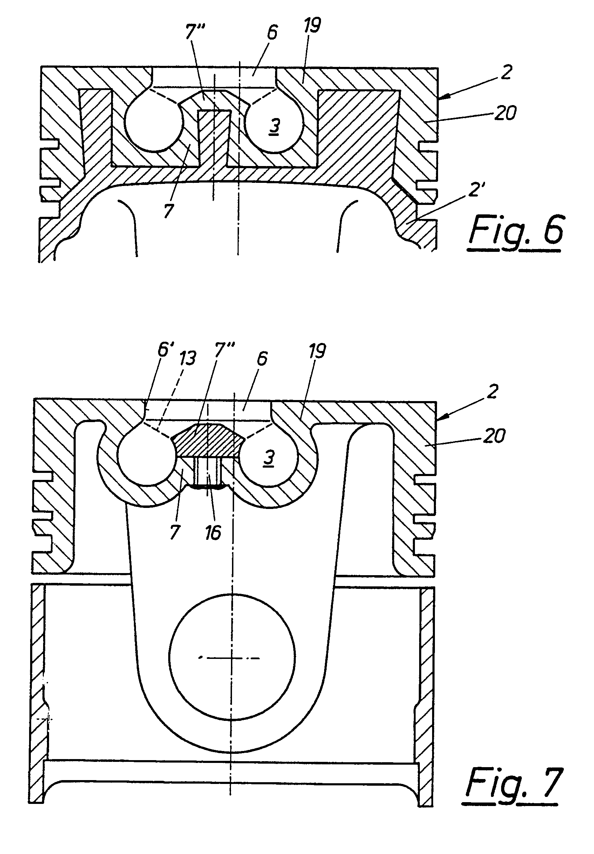

Die beiden Ausführungen nach Fig. 6 und 7 entsprechen, was die Form der Brennraummulde 3 und des Mittenteiles 7 anbelangt, der Ausführung nach Fig. 1 und 2. Bei der Ausführung nach Fig. 6 ist der Muldenbereich 19 und der Ringträgerbereich 20 des Kolbens 2 aus höher temperaturbeständigem Material, z.B. 25Cr20Ni-Stahl hergestellt, sowie formschlüssig und/oder nach dem Al-Fin-Verfahren angegossenem Schaftteil 2′ des Kolbens 2 aus einer für moderne Kolben üblichen Aluminiumlegierung.

Fig. 7 zeigt die Ausführung der erfindungsgemäßen Brennraummulde 3 in einem Pendelschaftkolben mit einschraubbarem und/oder eingeschweißtem oberen Teil 7″ des Mittenteils 7.

Auch dieser Teil 7″ kann aus dem selben Material bestehen wie der übrige Kolben, er kann jedoch auch aus einem höher temperaturbeständigem Material bestehen.

## Ansprüche

1. Luftverdichtende, ventilgesteuerte Brennkraftmaschine mit direkter Kraftstoffeinspritzung und einem Einlaßkanal zur Erzeugung einer Rotation der einströmenden Luft um die Zylinderachse, sowie einem im Kolben liegenden am Ende des Verdichtungshubes nahezu die gesamte Verbrennungsluft aufnehmenden torusförmigen Brennraum, dessen Auslauf zur Kolbenoberseite aus einer Einschnürung besteht, deren Umfangsbegrenzung zylindrisch ist, einem rotationsförmigen Mittenteil, der an der Bildung des torusförmigen Brennraumes beteiligt ist, sowie einer mit ihren Ausmündungen annähernd auf der Brennraumachse angeordneten, in den Brennraum hineinragenden Einspritzdüse, welche den Kraftstoff in den torusförmigen Brennraum einbringt, dadurch gekennzeichnet, daß die Einschnürung (6) des Brennraumes (3) von dessen zentralen Bereich her durch den rotationsförmigen Mittenteil (7) begrenzt ist, dessen obere Begrenzung (7″) im O.T. des Kolbens (2) knapp unterhalb der Kraftstoffstrahlen (9) der Einspritzdüse (8) bleibt und die innere Begrenzung des ringförmigen Überströmquerschnittes (13) vom Brennraum (3) zur Einschnürung (6) bzw. zum Zylinderraum hin bildet, und daß die Kraftstoffstrahlen (9) der Einspritzdüse (8) auf den Übergangsbereich (10) des Brennraumes (3) zur zylindrischen Einschnürung (6) hin gerichtet sind.

2. Brennkraftmaschine nach Anspruch 1, dadurch gekennzeichnet, daß das Verhältnis der Breite b des ringförmigen Überströmquerschnittes (13) zum Durchmesser (2r) der erzeugenden Kreisfläche des Torus 0,2 bis 0,9, vorzugsweise 0,5 bis 0,7 beträgt.

3. Brennkraftmaschine nach Anspruch 1 oder 2, dadurch gekennzeichnet, daß die Radien (R) des Mittelpunktkreises und (r) der erzeugenden Kreisfläche des Torus (4) bei einem vorgegebenen Brennraumvolumen so gewählt sind, daß die vom wandangelagerten Kraftstofffilm benetzbare Oberfläche möglichst groß ist.

4. Brennkraftmaschine nach einem der Ansprüche 1 bis 3, gekennzeichnet durch die Verwendung einer 4- oder 5-Lochdüse bei einem mittleren Drallniveau $(n_D/n)_m = 2{,}2$ worin $n_D$ die im Stationärversuch ermittelte Flügeldrehzahl des Drallmeßgerätes und n die aus der gemessenen Durchflußmenge berechnete Motordrehzahl ist, und der Index m ausdrückt, daß das Verhältnis $n_D/n$ über dem Ansaugtakt einen von O.T. bis U.T. des Motors integrierten Mittelwert darstellt.

5. Brennkraftmaschine nach Anspruch 4, dadurch gekennzeichnet, daß die mittlere freie Strahllänge 20 ± 5% des Zylinderdurchmessers D beträgt.

6. Brennkraftmaschine nach einem der Ansprüche 1 bis 5, dadurch gekennzeichnet, daß die Auftreffbereiche der Kraftstoffstrahlen (9) im Übergang zwischen Einschnürung (6) und torusförmigem Brennraum (4) liegt und die Auftreffpunkte am Muldenrand gleichmäßig verteilt sind.

7. Brennkraftmaschine nach einem der Ansprüche 1 bis 6, dadurch gekennzeichnet, daß der torusförmige Brennraum (4) aus zwei Teilen mit unterschiedlichen R und r, allenfalls mit einem zylindrischen Zwischenteil, zusammengesetzt ist.

8. Brennkraftmaschine nach einem der Ansprüche 1 bis 7, dadurch gekennzeichnet, daß die Begrenzung des oberen Teiles (7″) des zentrischen rotationsförmigen Mittenteiles (7) im Brennraum kegel- und/oder kugelkalottenförmig ist.

9. Brennkraftmaschine nach einem der Ansprüche 1 bis 8, dadurch gekennzeichnet, daß alle entstehenden Kanten im Bereich der Brennraummulde (3) und Auslauf- und Einschnürungsbereich (6) zur Vermeidung zu großer thermischer Belastungen abgerundet sind.

10. Brennkraftmaschine nach einem der Ansprüche 1 bis 9, dadurch gekennzeichnet, daß der Mittenteil (7) und/oder der Muldenrand (14) und/oder Muldenbereich + Ringträger (20) im Vergleich zum übrigen Kolben (2) aus einem Material höherer Temperaturfestigkeit bestehen und diese Teile mit dem Schaftteil entweder zusammengegossen oder lösbar verbunden sind.

## Claims

1. A valve-controlled compression-ignition engine with direct fuel injection and an intake passage inducing the inflowing air to rotate around the cylinder axis, and with a toroidal combustion chamber, which is located in the piston and in which almost all of the combustion air is confined towards the end of the compression stroke -the passage of the combustion chamber opening towards the piston top being restricted and the peripheral wall of this restricted passage or throat being cylindrical -, and with a rotationally symmetric centre part forming part of the toroidal combustion chamber, and with an injection nozzle projecting into the combustion chamber -its holes being located approximately on the axis of the combustion chamber -, through which the fuel is fed into the toroidal combustion chamber, wherein said restricted passage or throat (6) of the combustion chamber (3) is bounded in the centre area of the combustion chamber by the rotationally symmetric centre part (7), whose top (7") remains slightly below the fuel jets (9) of the injection nozzle (8) at the upper dead centre of the piston (2), and forms the inner boundary of the ringshaped scavenge passage (13) from the combustion chamber (3) to the throat (6), or rather, to the cylinder itself, and wherein the fuel jets (9) of the injection nozzle (8) are directed towards the area (10) between the combustion chamber (3) and the cylindrical throat (6).

2. An internal combustion engine as in claim 1, wherein the ratio between the width (b) of the ring-shaped scavenge passage (13) and the diameter (2r) of the generating circle of the torus is 0.2 to 0.9, preferably 0.5 to 0.7.

3. An internal combustion engine as in claim 1 or 2, wherein the radius (R) of the circle described by the centre of the generating circle and the radius (r) of the generating circle of the torus (4) itself are chosen for a given volume of the combustion chamber such that the surface wetted by the wall-deposited fuel film is a maximum.

4. An internal combustion engine as in any of claims 1 to 3, wherein a nozzle with 4 or 5 holes is employed with a mean number of angular momentum of $(n_D/n)_m = 2,2$, $n_D$ being the number of revolutions of the vanes of the angular momentum meter obtained in a stationary test, and n being the engine speed calculated from the measured flow, the index m signifying that the ratio $n_D/n$ represents a mean value integrated from upper to lower dead centre during the suction stroke of the engine.

5. An internal combustion engine as in claim 4, wherein the mean free length of the fuel jets amounts to 20 ± 5% of the cylinder diameter D.

6. An internal combustion engine as in any of claims 1 to 5, wherein the areas hit by the fuel jets (9) are situated in the area between the throat (6) and the toroidal combustion chamber (4), and the actual points of impact are evenly distributed over the rim of the recess.

7. An internal combustion engine as in any of claims 1 to 6, wherein the toroidal combustion chamber (4) consists of two parts with different radii (R) and (r), respectively, possibly provided with a cylindrical part in between.

8. An internal combustion engine as in any of claims 1 to 7, wherein the top (7") of the central rotationally symmetric centre part (7) in the combustion chamber is configured as a cone and/or spherical cap.

9. An internal combustion engine as in any of claims 1 to 8, wherein all edges in the area of the combustion recess (3) and the throat (6) are rounded in order to avoid large thermal loads.

10. An internal combustion engine as in any of claims 1 to 9, wherein the centre part (7) and/or the rim (14) of the recess (3) and/or the recess area plus part of the piston carrying the piston rings (20) are made of material whose temperature resistance is higher than that of the rest of the piston (2), and wherein these parts either are cast integral with the piston body or are fastened to it detachably.

## Revendications

1. Moteur à combustion interne, à compression d'air, commandé par soupapes, avec injection directe du carburant et avec un canal d'admission pour produire une giration de l'air d'admission autour de l'axe du cylindre, ainsi qu'avec une chambre de combustion en forme de tore située dans le piston et recevant la presque totalité de l'air de combustion à la fin de la course de compression, la sortie de cette chambre vers la face supérieure du piston étant constituée par un étranglement dont la délimitation périphérique est cylindrique, avec une partie médiane de révolution qui participe à la formation de la chambre de combustion en forme de tore, ainsi qu'avec un injecteur faisant saillie dans la chambre de combustion et dont les orifices de sortie sont disposés à peu près sur l'axe de la chambre de combustion, cet injecteur introduisant le carburant dans la chambre de combustion en forme de tore, moteur à combustion interne caractérisé en ce que l'étranglement (6) de la chambre de combustion (3) est délimité à partir de sa zone centrale par la partie médiane (7) de révolution, dont la limite supérieure (7") reste, au point mort haut du piston (2), un peu au-dessous des jets de carburant (9) de l'injecteur (8), et forme la limitation interne de la section transversale annulaire de passage (13) de la chambre de combustion (3) vers l'étranglement (6) ou bien vers la chambre du cylindre, tandis que les jets de carburant (9) de l'injecteur (8) sont dirigés sur la zone de transition (10) entre la chambre de combustion (3) et l'étranglement cylindrique (6).

2. Moteur à combustion interne selon la revendication 1, caractérisé en ce que le rapport de la largeur (b) de la section transversale annulaire de passage (13) au diamètre (2r) de la surface circulaire génératrice du tore, est de 0,2 à 0,9, et de préférence de 0,5 à 0,7.

3. Moteur à combustion interne selon la revendication 1 ou la revendication 2, caractérisé en ce que le rayon (R) du cercle sur lequel se trouvent les centres des surfaces circulaires génératrices du tore (4), et le rayon (r) de ces surfaces, sont choisis de façon que pour un volume prédéfini de la chambre de combustion, sa surface susceptible d'être mouillée par le film de carburant déposé sur la paroi, soit aussi grande que possible.

4. Moteur à combustion interne selon une des revendications 1 à 3, caractérisé en ce qu'il est mis en oeuvre un injecteur à quatre ou cinq trous pour un niveau de giration moyen $(n_D/n)_m = 2,2$, $n_D$ étant la vitesse de rotation des ailettes de l'appareil de mesure de la giration déterminée en essai stationnaire, et n la vitesse de rotation du moteur calculée à partir du débit mesuré, et l'indice m signifie que le rapport $n_D/n$ représente une valeur moyenne intégrée sur la période d'aspiration allant du point mort haut du piston jusqu'au point mort bas du piston.

5. Moteur à combustion interne selon la revendication 4, caractérisé en ce que la longueur libre moyenne des jets de carburant s'élève à 20 ± 5% du diamètre D du cylindre.

6. Moteur à combustion interne selon une des revendications 1 à 5, caractérisé en ce que la zone d'impact des jets de carburant (9) se situe sur la transition entre l'étranglement (6) et la chambre de combustion en forme de tore (4), tandis que les points d'impact sont uniformément répartis sur le bord de la chambre.

7. Moteur à combustion interne selon une des revendications 1 à 6, caractérisé en ce que la chambre de combustion en forme de tore (4) est composée de deux parties avec des rayons (R) et (r) différents, éventuellement avec une partie intermédiaire cylindrique.

8. Moteur à combustion interne selon une des revendications 1 à 7, caractérisé en ce que la limitation de la partie supérieure (7″) de la partie médiane centrale de révolution (7) dans la chambre de combustion est en forme de cône et/ou de calotte sphérique.

9. Moteur à combustion interne selon une des revendications 1 à 8, caractérisé en ce que toutes les arêtes existantes dans la zone de la cavité (3) de la chambre de combustion et dans la zone de sortie et de rétrécissement (6) sont arrondies pour éviter des contraintes thermiques trop importantes.

10. Moteur à combustion interne selon une des revendications 1 à 9, caractérisé en ce que la partie médiane (7) et/ou le bord (14) de la cavité, et/ou la zone de la cavité et le support (20) des segments, sont constitués, par comparaison avec le reste du piston (2), d'un matériau de résistance plus élevée à la température, et ces différentes parties sont, soit couplées ensemble avec la partie de fût, soit reliées avec elle de façon amovible.

*Fig. 1*

*Fig. 2*

_Fig. 3_

_Fig. 4_

_Fig. 5_

_Fig. 6_

_Fig. 7_